# EUROPÄISCHE PATENTSCHRIFT

(11) **EP 0 468 156 B1**
(45) Veröffentlichungstag und Bekanntmachung des Hinweises auf die Patenterteilung: **27.04.1994**
(21) Anmeldenummer: 91107914.3
(22) Anmeldetag: 16.05.1991
(51) Int. Cl.: B23B 31/165

(54) **Bohrfutter**
Drilling chuck
Mandrin de perçage

(30) Priorität: 21.07.1990 DE 4023304
(43) Veröffentlichungstag der Anmeldung: 29.01.1992
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- DE-C- 3 809 316
- DE-U- 9 016 578
- FR-A- 2 606 691
- US-A- 2 684 856

## Beschreibung

Die Erfindung betrifft ein Bohrfutter mit zwischen sich eine Aufnahme für das Bohrwerkzeug bildenden Spannbacken, mit einem Futterkörper, in dem die Spannbacken gleichmäßig um die Drehachse verteilt in Führungsbohrungen angeordnet sind, die in zur Drehachse geneigter Richtung verlaufen, so daß die Führungsbohrungen mit ihren Achsen nach vorn, d. h. zum Bohrwerkzeug hin, zusammenlaufen und rückwärts in Öffnungen an der Mantelfläche des Futterkörpers austreten, und mit einem zur Drehachse koaxialen, drehbar und axial unverschiebbar am Futterkörper gelagerten Stellring, der zum Verstellen der Spannbacken ein mit der Drehachse koaxiales Stellgewinde aufweist, das an jeder Spannbacke mit einer an der Spannbacke vorgesehenen Zahnreihe im Eingriff steht, sowie einem außen am Futterkörper axial vor dem Stellring, koaxial mit der Drehachse angeordneten Griffring, der undrehbar und axial unverschiebbar mit dem Futterkörper verbunden ist und außen Griffflächen bildet, an denen das Bohrfutter mit der Hand ergriffen und festgehalten werden kann.

Bohrfutter dieser Art sind beispielsweise aus FR 2 606 691 A1 bekannt. Bei ihnen wird der Umstand genutzt, daß der Futterkörper entsprechend der maximalen Hublänge der Spannbacken nach vorne über den Stellring vorstehen muß, damit die Spannbackenführung auch bei kleinen Spanndurchmessern ausreichend gewährleistet ist. Dieser vorstehende Teil des Futterkörpers trägt den Griffring, der zur Handhabung des Bohrfutters mit der Grifffläche versehen ist. Damit bietet sich die Möglichkeit, den Futterkörper am Griffring zu halten, wenn der Stellring zum Zwecke des Spannens oder Lösens des Ohrwerkzeugs betätigt werden soll. Bei derartigen Bohrfuttern besteht die Gefahr, daß sich beim Bohrbetrieb der Stellring relativ zum Griffring verdreht, was zu einer unerwünschten Lockerung der Einspannung des Bohrwerkzeuges führt.

Der Erfindung liegt die Aufgabe zugrunde, ein Bohrfutter der eingangs genannten Art konstruktiv so auszubilden, daß im Bohrbetrieb keine unbeabsichtigte Lockerung der Einspannung des Bohrwerkzeuges erfolgen kann.

Diese Aufgabe wird nach der Erfindung dadurch gelöst, daß im Griffring mindestens ein gegen den Stellring axial verstellbares Sperrglied jeweils in einer schlitzartigen Tasche geführt ist, das unter der Kraft einer Feder in eine Sperrausnehmung am Stellring greift und den Stellring gegen unerwünschte Verdrehung sichert, und daß der Griffring eine sich axial erstreckenden, am hinteren Griffringende und zum Futterkörper hin offene Tasche aufweist, in den ein am Futterkörper fester und den Griffring gegen Verdrehen sichernder Bolzkopf greift.

Durch diesen erfindungsgemäßen Aufbau des Bohrfutters ist der Stellring durch das in seine Sperrausnehmung eingreifende Sperrglied während des Bohrbetriebes undrehbar mit dem Griffring verbunden, der selber undrehbar mit dem Futterkörper verbunden ist. Gleichzeitig läßt sich die drehfeste Verbindung zwischen Griffring und Stellring in einfacher Weise lösen, wenn ein Bohrwerkzeug eingespannt bzw. gelöst werden soll.

Im einzelnen empfiehlt es sich dazu in bevorzugter Ausführungsform, die Anordnung so zu treffen, daß das Sperrglied ein im Griffring axial verschiebliches Riegelglied ist, dessen Riegelkopf und ihn aufnehmende Sperrausnehmung in Drehrichtung einander in derart geneigten Flankenflächen anliegen, daß diese beim Verdrehen des Stellrings von Hand oder mittels eines Futterschlüssels den Riegelkopf aus der Sperrausnehmung gegen die Kraft der Feder herausdrücken, im übrigen aber den Stellring gegen Verdrehen blockieren. Zweckmäßig sind mehrere Sperrglieder vorgesehen und verteilt über den Futterumfang angeordnet. Die Sperrglieder können dabei in gleicher Winkelteilung wie die Sperrausnehmungen angeordnet sein, so daß sämtliche Sperrglieder gleichzeitig in die Sperrausnehmungen eintreten. Im Sinne einer feineren Rastunterteilung ist es aber unter Umständen günstiger, die Sperrglieder in einer Winkelteilung längs des Futterumfanges anzuordnen, die nach Art eines Nonius geringfügig größer oder kleiner als die der Sperrausnehmungen am Stellring ist. Eine bevorzugte Ausführungsform ist daher dadurch gekennzeichnet, daß zumindest einige Sperrglieder längs des Futterumfangs in einer Winkelteilung angeordnet sind, bei der der Winkel zwischen diesen Sperrgliedern gleich der Summe aus einem ganzzahligen Vielfachen des Winkelabstandes zwischen aufeinanderfolgenden Sperrausnehmungen und einem Differenzwinkel ist, der gleich dem letztgenannten Winkelabstand geteilt durch die Anzahl dieser Sperrglieder ist.

Eine hinsichtlich der Montage des Griffrings bevorzugte Ausführungsform ist dadurch gekennzeichnet, daß der Griffring in axialer Richtung zwischen dem Bolzenkopf und einem Federring festgelegt ist, der am vorderen Ende des Griffrings in einer Ringnut des Futterkörpers angeordnet ist. Dann kann auch der Griffring bei der Montage des Bohrfutters axial von vorne her auf den Futterkörper aufgeschoben und durch den Federring gesichert werden.

Im folgenden wird die Erfindung an einem in der Zeichnung dargestellten Ausführungsbeispiel näher erläutert; es zeigt:

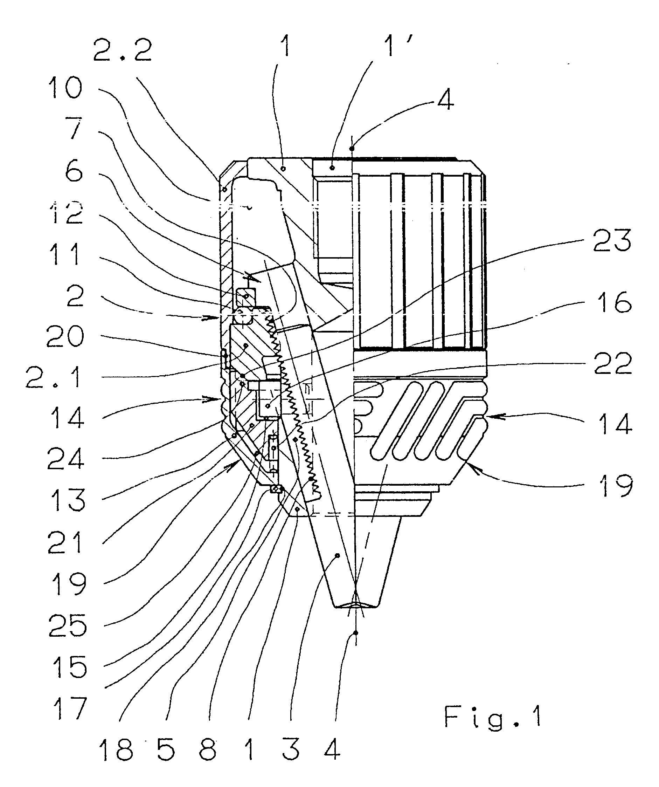

- Fig. 1: ein Bohrfutter nach der Erfindung, teils im Axialschnitt, teils in Seitenansicht,

In der Zeichnung ist der Futterkörper mit 1 und der Stellring mit 2 bezeichnet. Der Futterkörper 1 ist mittels einer Gewindeaufnahme 1' an die nicht dargestellte Bohrspindel anschließbar. Die üblicherweise zu dritt über den Umfang des Bohrfutters verteilten und zwischen sich eine Aufnahme für das nicht dargestellte Bohrwerkzeug bildenden Spannbacken tragen die Bezugsziffer 3. Die Spannbacken 3 sind gleichmäßig um die Drehachse 4 des Bohrfutters im Futterkörper 1 in Führungsbohrungen 5 angeordnet, die in zur Drehachse 4 geneigter Richtung verlaufen, so daß die Achsen der Führungsbohrungen 5 nach vorn, d. h. zum Bohrwerkzeug hin, zusammenlaufen. Der Stellring 2 ist koaxial zur Drehachse 4 am Futterkörper 1 angeordnet. Er ist drehbar und axial unverschiebbar am Futterkörper 1 gelagert und zum Verstellen der Spannbacken 3 in deren Führungsbohrungen 5 mit einem mit der Drehachse 4 koaxialen Stellgewinde 7 versehen. Dieses Stellgewinde 7 ist entsprechend der Neigung der Spannbacken 3 gegen die Drehachse 4 konisch ausgebildet und steht in jeder Spannbacke 3 mit einer an der Spannbacke vorgesehenen Zahnreihe 8 im Eingriff, so daß eine Drehung des Stellrings 2 ein Verschieben der Spannbacken 3 in den Führungsbohrungen 5 ergibt. Die Spannbacken 3 sind im wesentlichen kreiszylindrische Bolzen, die auf der dem Stellgewinde 7 zugewandten Seite abgeflacht und dort mit der Zahnreihe 8 ausgestattet sind. Die Führungsbohrungen 5 treten in Öffnungen 6 an der Mantelfläche des Futterkörpers 1 aus. Im Bereich dieser Öffnungen 6 besitzt der Stellring 2 einen Gewindering 2.1, an dem das Stellgewinde 7 ausgebildet ist. Weiter besitzt der Stellring 2 eine Stellhülse 2.2, die die Öffnungen 6 übergreift und abdeckt und zusammen mit dem Futterkörper 1 einen an die Öffnungen 6 anschließenden Ringraum 10 bildet, in den die Spannbacken 3 aus den Führungsbohrungen 5 und Öffnungen 6 austreten können. Der Gewindering 2.1 ist axial rückwärtig über ein Kugellager 11 und einen Stützring 12 am Futterkörper 1 abgestützt. Axial nach vorn ist der Stellring 2 an einem Griffring 13 abgestützt, der außen am Futterkörper 1 axial vor dem Stellring 2 koaxial mit der Drehachse 4 des Bohrfutters angeordnet ist. Der Griffring 13 ist undrehbar und axial unverschiebbar mit dem Futterkörper 1 verbunden und bildet an seiner Außenseite Griffflächen 14, an denen das Bohrfutter mit der Hand ergriffen und festgehalten werden kann. Der Griffring 13 besitzt eine sich axial erstreckende, am hinteren Griffringende und zum Futterkörper 1 hin offene Tasche 15, in den ein am Futterkörper 1 fester und den Griffring 13 gegen Verdrehen sichernder Bolzenkopf 16 greift. Im übrigen ist der Griffring 13 in axialer Richtung zwischen dem Bolzenkopf 16 einerseits und einem Federring 17 andererseits festgelegt, der am vorderen Ende des Griffrings 13 in einer Ringnut 18 des Futterkörpers 1 angeordnet ist. Im Ergebnis kann das Bohrfutter in einfacher Weise dadurch montiert werden, daß zunächst der Stellring 2 mit dem Kugellager 11 und dem Stützring 12 von vorne her auf den Futterkörper 1 aufgeschoben wird. Anschließend wird der Bolzenkopf 16 am Futterkörper 1 befestigt und dann der Griffring 13 axial von vorne her auf den Futterkörper 1 aufgeschoben, wobei der Bolzenkopf 16 in die Tasche 15 eintritt. Abschließend wird der Federring 17 zur Sicherung des Griffrings 13 und damit auch des Stellrings 2 in die Ringnut 18 eingelegt.

Der Griffring 13 besitzt im Bereich der Griffflächen 14 etwa gleichen Außendurchmesser wie der Stellring 2 und ist zum vorderen Ende hin bei 19 konisch verjüngt. Der Stellring 2 und der Griffring 13 überlappen sich axial rings über ihren Umfang, wozu in den Ausführungsbeispielen der Griffring 13 mit einem Kragen 20 in einen entsprechenden Ringfalz am Stellring 2 eingreift.

Im Griffring 13 sind gegen den Stellring 2 verstellbare Sperrglieder 21 geführt, die jeweils unter der Kraft einer Feder 22 in eine Sperrausnehmung 23 am Stellring 2 greifen und den Stellring gegen unerwünschte Verdrehung sichern. In der Zeichnung ist lediglich eines dieser Sperrglieder 21 erkennbar. Es ist als ein im Griffring 13 axial verschiebliches Riegelglied ausgebildet, dessen Riegelkopf 24 und die ihn aufnehmende Sperrausnehmung 23 in Drehrichtung einander in derart geneigten Flankenflächen anliegen, so daß diese beim Verdrehen des Stellrings 2 von Hand oder mittels eines Futterschlüssels den Riegelkopf 24 aus der Sperrausnehmung 23 gegen die Kraft der Feder 22 herausdrücken, im übrigen aber den Stellring 2 gegen Verdrehen blockieren. Im Ergebnis kann der Stellring 2 von Hand verdreht werden, ohne daß die Sperrglieder 21 zuvor noch eigens in eine Entriegelungsstellung gebracht werden müßten. Die Sperrglieder 21 sind in schlitzartigen Taschen 25 des Griffrings 13 geführt und axial gegen den Stellring 2 durch die Federn 22 beaufschlagt. Die Sperrausnehmungen 23 sind von einem sich am Stellring 2 bzw. Gewindering 2.1 längs des Ringumfangs erstreckenden Zahnkranz gebildet, zwischen dessen Zähne die Sperrglieder 21 mit ihrem Riegelkopf 24 eingreifen.

## Patentansprüche

1. Bohrfutter mit zwischen sich eine Aufnahme für das Bohrwerkzeug bildenden Spannbacken (3), mit einem Futterkörper (1), in dem die Spannbacken (3) gleichmäßig um die Drehachse (4) verteilt in Führungsbohrungen (5) angeordnet sind, die in zur Drehachse (4) geneigter Richtung verlaufen, so daß die Führungsbohrungen (5) mit ihren Achsen nach vorn, d. h. zum Bohrwerkzeug hin, zusammenlaufen und rückwärts in Öffnungen (6) an der Mantelfläche des Futterkörpers (1) austreten, und mit einem zur Drehachse (4) koaxialen, drehbar und axial unverschiebbar am Futterkörper (1) gelagerten Stellring (2), der zum Verstellen der Spannbacken (3) ein mit der Drehachse (4) koaxiales Stellgewinde (7) aufweist, das an jeder Spannbacke (3) mit einer an der Spannbacke vorgesehenen Zahnreihe (8) im Eingriff steht, sowie einem außen am Futterkörper (1) axial vor dem Stellring (2), koaxial mit der Drehachse (4) angeordneten Griffring (13), der undrehbar und axial unverschiebbar mit dem Futterkörper (1) verbunden ist und außen Griffflächen (14) bildet, an denen das Bohrfutter mit der Hand ergriffen und festgehalten werden kann, dadurch gekennzeichnet, daß im Griffring (13) mindestens ein gegen den Stellring (2) verstellbares Sperrglied (21) jeweils in einer schlitzartigen Tasche geführt ist, das unter der der Kraft einer Feder (22) in eine Sperrausnehmung (23) am Stellring (2) greift und den Stellring (2) gegen unerwünschte Verdrehung sichert, daß der Griffring (13) eine sich axial erstreckende, am hinteren Griffringende und zum Futterkörper (1) hin offene Tasche (15) aufweist, in den ein am Futterkörper (1) fester und den Griffring (13) gegen Verdrehen sichernder Bolzenkopf (16) greift.

2. Bohrfutter nach Anspruch 1, dadurch gekennzeichnet, daß das Sperrglied (21) ein im Griffring (13) axial verschiebliches Riegelglied ist, dessen Riegelkopf (24) und die ihn aufnehmende Sperrausnehmung (23) in Drehrichtung einander in derart geneigten Flankenflächen anliegen, daß diese beim Verdrehen des Stellrings (2) von Hand oder mittels eines Futterschlüssels den Riegelkopf (24) aus der Sperrausnehmung (23) gegen die Kraft der Feder (22) herausdrücken, im übrigen aber den Stellring (2) gegen Verdrehen blockieren.

3. Bohrfutter nach Anspruch 1 oder 2, dadurch gekennzeichnet, daß mehrere Sperrglieder (21) vorgesehen und verteilt über den Futterumfang angeordnet sind.

4. Bohrfutter nach Anspruch 3, dadurch gekennzeichnet, daß zumindest einige der Sperrglieder (21) längs des Futterumfangs in einer Winkelteilung angeordnet sind, bei der der Winkel zwischen diesen Sperrgliedern gleich der Summe aus einem ganzzahligen Vielfachen des Winkelabstands zwischen aufeinander folgenden Sperrausnehmungen (23) und einem Differenzwinkel ist, der gleich dem letztgenannten Winkelabstand geteilt durch die Anzahl dieser Sperrglieder ist.

5. Bohrfutter nach einem der Ansprüche 1 bis 4, dadurch gekennzeichnet, daß der Griffring (13) in axialer Richtung zwischen dem Bolzenkopf (16) und einem Federring (17) festgelegt ist, der am vorderen Ende des Griffrings (13) in einer Ringnut (18) des Futterkörpers (1) angeordnet ist.

## Claims

1. A drilling chuck comprising clamping jaws (3) which form between them a receiving means for the drilling tool, a chuck body (1) in which the clamping jaws (3) are arranged distributed uniformly about the axis of rotation (4) in guide bores (5) which extend in a direction that is inclined relative to the axis of rotation (4) so that the axes of the guide bores (5) converge forwardly, that is to say towards the drilling tool, and issue rearwardly in openings (6) at the peripheral surface of the chuck body (1), and an adjusting ring (2) which is coaxial with respect to the axis of rotation (4) and which is mounted rotatably and axially immovably on the chuck body (1) and which for adjustment of the clamping jaws (3) has an adjusting screwthread (7) which is coaxial with the axis of rotation (4) and which at each clamping jaw (3) is engaged with a row of teeth (8) provided on the clamping jaw, and a gripping ring (13) which is arranged externally on the chuck body (1) axially in front of the adjusting ring (2) and coaxially with the axis of rotation (4) and which is non-rotatably and axially immovably connected to the chuck body (1) and which on the outside forms gripping surfaces (14) at which the drilling chuck can be gripped and held fast with the hand, characterised in that at least one locking member (21) which is displaceable towards the adjusting ring (2) is guided in the gripping ring (13) in a respective slot-like pocket, which locking member (21) engages under the force of a spring (22) into a locking recess (23) on the adjusting ring (2) and secures the adjusting ring (2) to prevent undesired rotary movement, and that the gripping ring (13) has an axially extending pocket (15) which is open at the rear end of the gripping ring and towards the chuck body (1) and into which engages a pin head (16) which is fixed on the chuck body (1) and which prevents the gripping ring (13) from rotating.

2. A drilling chuck according to claim 1 characterised in that the locking member (21) is a bolt member which is axially displaceable in the gripping ring (13) and whose bolt head (24) and the locking recess (23) accommodating same bear against each other in the direction of rotation at flank surfaces which are inclined in such a way that upon rotation of the adjusting ring (2) by hand or by means of a chuck key said surfaces urge the bolt head (24) out of the locking recess (23) against the force of the spring (22) but otherwise block the adjusting ring (2) to prevent rotary movement thereof.

3. A drilling chuck according to claim 1 or claim 2 characterised in that there are provided a plurality of locking members (21) which are arranged distributed over the periphery of the chuck.

4. A drilling chuck according to claim 3 characterised in that at least some of the locking members (21) are arranged along the periphery of the chuck in an angularly arranged array in which the angle between said locking members is equal to the sum of an integral multiple of the angular spacing between successive locking recesses (23) and a difference angle which is equal to the last-mentioned angular spacing divided by the number of said locking members.

5. A drilling chuck according to one of claims 1 to 4 characterised in that the gripping ring (13) is fixed in the axial direction between the pin head (16) and a spring ring (17) which is arranged at the front end of the gripping ring (13) in an annular groove (18) in the chuck body (1).

## Revendications

1. Mandrin de perçage, comprenant des mâchoires de serrage (3) qui forment entre elles un logement pour l'outil de perçage, un corps de mandrin (1) dans lequel les mâchoires de serrage (3) sont réparties uniformément autour de l'axe de rotation (4) et disposées dans des alésages de guidage (5) inclinés par rapport à l'axe de rotation (4), de telle sorte que les axes des alésages de guidage (5) convergent vers l'avant, c'est-à-dire en direction de l'outil de perçage, et sortent à l'arrière dans des ouvertures (6) ménagées dans la surface latérale du corps de mandrin (1), et une bague de réglage (2) montée coaxialement par rapport à l'axe de rotation (4), de manière tournante et immobile dans le sens axial sur le corps de mandrin (1), laquelle comporte pour le déplacement des mâchoires de serrage (3) un filetage de réglage (7) coaxial par rapport à l'axe de rotation (4) qui coopère sur chaque mâchoire de serrage (3) avec une rangée de dents (8) prévue sur ladite mâchoire de serrage, ainsi qu'une bague de préhension (13) disposée à l'extérieur du corps de mandrin (1), axialement en avant de la bague de réglage (2) et coaxialement par rapport à l'axe de rotation (4), laquelle est couplée de manière solidaire en rotation et immobile dans le sens axial avec le corps de mandrin (1) et forme extérieurement des surfaces de prise (14) qui permettent de saisir et de retenir le mandrin de percussion à la main, **caractérisé en ce** que dans la bague de préhension (13), au moins un organe d'arrêt (21) axialement mobile par rapport à la bague de réglage (2) est respectivement guidé dans une poche en forme de fente et s'engage, sous l'action d'un ressort (22), dans un évidement d'arrêt (23) sur la bague de réglage (2) en empêchant une rotation non désirée de ladite bague de réglage (2), et que la bague de préhension (13) comporte une poche (15) s'étendant dans le sens axial et ouverte à l'extrémité postérieure de la bague de préhension et en direction du corps de mandrin (1), dans laquelle s'engage une tête de boulon (16) solidaire du corps de mandrin (1) et bloquant la bague de préhension (13) en rotation.

2. Mandrin de perçage selon la revendication 1, caractérisé en ce que l'organe d'arrêt (21) est réalisé sous la forme d'un organe de verrouillage déplaçable axialement dans la bague de préhension (13), dont la tête de verrouillage (24) et l'évidement d'arrêt (23) qui la reçoit sont appliqués l'un contre l'autre dans le sens de rotation sur des flancs inclinés de telle façon que, lors de la rotation de la bague de réglage (2) à la main ou au moyen d'une clé de mandrin, lesdits flancs dégagent la tête de verrouillage (24) de l'évidement d'arrêt (23) contre la force du ressort (22), tout en bloquant la bague de réglage (2) en rotation.

3. Mandrin de perçage selon l'une des revendications 1 ou 2, caractérisé en ce qu'il comprend plusieurs organes d'arrêt (21) répartis sur la périphérie du mandrin.

4. Mandrin de perçage selon la revendication 3, caractérisé en ce qu'au moins quelques organes d'arrêt (21) sont disposés le long de la périphérie du mandrin suivant une division angulaire dans laquelle l'angle entre lesdits organes d'arrêt est égal à la somme d'un multiple entier de la distance angulaire entre les évidements d'arrêt (23) successifs et d'un angle différentiel lequel est égal à cette dernière distance angulaire divisée par le nombre desdits organes d'arrêt.

5. Mandrin de perçage selon l'une des revendications 1 à 4, caractérisé en ce que la bague de préhension (13) est bloquée dans le sens axial entre la tête de boulon (16) et une rondelle-ressort (17) disposée à l'extrémité antérieure de ladite bague de préhension (13) dans une rainure annulaire (18) du corps de mandrin (1).
